**Europäisches Patentamt**

**European Patent Office**

**Office européen des brevets**

(19)

(11) Veröffentlichungsnummer: **0 195 837**
**A1**

(12) # EUROPÄISCHE PATENTANMELDUNG

(21) Anmeldenummer: **85103661.6**

(22) Anmeldetag: **27.03.85**

(51) Int. Cl.⁴: **F 24 J 2/04**

(43) Veröffentlichungstag der Anmeldung: **01.10.86**
**Patentblatt 86/40**

(84) Benannte Vertragsstaaten: **AT BE CH DE FR GB IT LI NL SE**

(71) Anmelder: **CPM Ceramic Patent Management, Inc., 1001 Lee Boulevard, Suite 210 P.O. Box 151, Lehigh Acres Florida 33936 (US)**

(72) Erfinder: **Froschauer, Leonhard, Dr., Regensburger Strasse 34, D-8440 Straubing (DE)**

(74) Vertreter: **Wasmeier, Alfons, Dipl.-Ing., Patentanwälte Dipl.-Ing. A.Wasmeier Dipl.-Ing. H.Graf Postfach 382 Greflinger Strasse 7, D-8400 Regensburg 1 (DE)**

(54) **Wand- und Dachverkleidungselement für Solaranlagen.**

(57) Bei einem Wand- und Dachverkleidungselement (15) für Solaranlagen, gebildet aus einer im wesentlichen rechtwinkeligen, viereckigen Flachform mit in deren Kopffeld (20) und in deren einem längsseitigen Bereich vorgesehener oberseitiger und ggfs. in deren Fußfeld (7a) und in deren anderem längsseitigen Bereich vorgesehener unterseitiger Verfalzung steigt eine, ggfs. nur gedachte Ebene, welche die Oberkanten (12) des außerhalb der oberseitigen Falzfelder gelegenen Elementenbereiches enthält, beginnend an der oberen Kante des Elementenfußes (7a), in einem spitzen Winkel vom Niveau der Grundfläche (6) der Seitenfalznut (4) so weit an, bis sie am formseitigen Beginn des Kopffeldes (20) eine der Gesamthöhe des Elementes im Fußbereich (7a) entsprechende Entfernung von der Grundfläche (6) erreicht hat, so daß die Oberkanten (12) in Längsrichtung einander benachbarter mit ihrem Fußfeld (7a) jeweils das Kopffeld (20) des nächsten Elementes überlappender Elemente in einer gemeinsamen Ebene liegen.

## Wand- und Dachverkleidungselement für Solaranlagen

Die Erfindung betrifft ein Wand- und Dachverkleidungselement für Solaranlagen nach dem Oberbegriff des Anspruches 1.

Für die Eindeckung von Dächern kennt man verschiedene Grundformen von Dachziegeln wie Flachziegel, Falzziegel oder Hohlziegel, die je nach dem Verwendungszweck zahlreiche unterschiedliche Merkmale aufweisen, die sie für ihren speziellen Gebrauch geeignet machen.

Allen bekannten Ziegeln ist aber gemeinsam, daß sie schuppenförmig verlegt werden, d.h., daß sie sich zumindest in ihrer Längsrichtung teilweise überlappend auf der Verlattung der Dachhaut befestigt werden. Diese gegenseitige mehr oder minder starke Überlappung dient der bei der Dacheindeckung wichtigsten Aufgabe, nämlich das Eindringen des über das Dach vom First bis zur Traufe ablaufenden Wassers unter die Dachhaut zu verhindern.

Die zahlreichen bekannten, teilweise komplizierten Ziegelformen verdeutlichen die ständigen Bemühungen, diese Aufgabe zu erfüllen und ferner den Normvorschriften gerecht zu werden.

Auch für die Verkleidung von Außenmauern, insbes. zu dem Schutz wetterseitiger Gebäudeteile ist es üblich, mit Hilfe einer am Mauerwerk angebrachten Verlattung Wandverkleidungselemente zu befestigen, die entsprechend der herkömmlichen Dacheindeckung ebenfalls sich gegensitig seitlich und von oben nach unten überlappend befestigt werden.

Die konventionelle Deckung von Dächern und das Verkleiden von Mauerwerk fordert bisher jedoch zahlreiche Zugeständnisse an das benötigte Zubehör, welches größtenteils in Sonderfertigung hergestellt werden muß und damit die Kosten der Deckung erhöht.

Heute haben zahlreiche Hauseigentümer die Absicht, eine Solarbeheizung auf dem Dach ihres Eigenheimes zu installieren, doch wird diesem Vorhaben häufig von den zuständigen Baubehörden entgegengetreten, da das Erscheinungsbild einer Dachfläche durch die Anbringung der für eine Solarbeheizung erforderlichen Elemente nicht den Gestaltungsrichtlinien der zuständigen Bauverordnungen entspricht.

Der Erfinder hat sich daher die Aufgabe gestellt, ein Dach-und Wandverkleidungselement zu schaffen, welches die aufgezeigten Nachteile der konventionellen Dachziegel nicht aufweist und ermöglicht, den bekannten schuppenförmigen Aufbau einer Dachfläche zu Gunsten einer im wesentlichen eben verlaufenden Oberfläche zu vermeiden.

Erfindungsgemäß wird dies mit den Merkmalen des Kennzeichens des Anspruches 1 erreicht.

Infolge der in Längsrichtung miteinander fluchtenden Oberkanten der vom First bis zur Traufe aneinandergrenzend angeordneten Vielzahl von Ziegeln, die mit ihrem jeweiligen Fußfeld das Kopffeld des sich unterhalb anschließenden Ziegels überlappen, entfällt die bei der schuppenartigen Anordnung herkömmlicher Ziegel bekannte Stufenform. Dabei bietet die längs der seitlichen Dachränder angeordnete, ebenfalls stufenlose, den Ortgang bildende Ziegelreihe den Vorteil, daß anstelle von Sonderziegeln mit teurer Einzelfertigung einfache Abschlußprofilelemente von etwa L-förmigem Querschnitt, die im Strangpreßverfahren hergestellt werden können, auf die seitlichen Endziegel aneinander anschließend, aufgelegt werden können.

Auch bei sogenannten Pultdächern kann man nun anstelle von speziellen Pultdachendziegeln, die ebenfalls einzeln angefertigt werden müßten, ähnliche stranggepreßte L-Profile als Abschluß verwenden.

Insbesondere ist aber darauf hinzuweisen, daß das erfindungsgemäße Dachverkleidungselement bereits infolge seiner
Grundkonstruktion als Entlüfterziegel verwendbar ist und die
Firstziegel ohne Einfügen eines speziellen Firstanschluß-Entlüfterziegels aufgesetzt werden können und dennoch die
erforderliche Belüftung der Dachhaut gewährleistet ist.

Bei den herkömmlichen Dachelementen benötigte man auch für
den seitlichen oberen Abschluß sowohl bei Pultdächern als
auch beim Zusammenkommen von Ortgang- und Firstziegeln
besonders ausgebildete Verbundziegel. Auch diese können jetzt
entfallen, da durch die Verwendung von L-förmigen seitlichen
und längs des Firstes verlaufenden L-Profilen bei Pultdächern
bzw. bei längs des Firstes angeordneten Firstziegeln, die
längs des Firstes verlaufenden Profile einfach mit den
Seitenprofilen aneinanderstoßen können.

Auch bei der Verwendung der erfindungsgemäßen Elemente zur
Verkleidung von Mauerwerk ist der Vorteil der stufenlosen
Aneinanderreihung der einzelnen Elemente hervorzuheben. Die
für Fenster und Türen erforderlichen Randelemente können
entsprechend den seitlichen Begrenzungselementen von Dächern
durch einfache L-Profile gebildet werden, deren Abmessungen
ohne besondere Schwierigkeiten beim Verlegen den örtlichen
Gegebenheiten anzupassen sind.

Bezüglich der Gestaltung der erfindungsgemäßen Elemente sei
auf die in den Unteransprüchen aufgeführten Einzelmerkmale
verwiesen.

Mit Hilfe der erfindungsgemäßen Dach- und Wandverkleidungselemente lassen sich Verschalungen mit vollständig ebener,
wenn gewünscht auch völlig unprofilierter Oberfläche schaffen, die dennoch dazu geeignet ist, die nach den Bauvorschriften geforderte Entlüftung des Mauerwerks ohne Verwendung besonderer Lüfterfirste oder Entlüfterziegel herbeizuführen und die Dach- oder Wandkonstruktion vor Feuchtigkeitsschäden zu bewahren.

Ferner ist durch die Kombination der erfindungsgemäßen Merkmale des Elementes mit den konventionellen Eigenschaften der herkömmlichen Falzziegel auch die erforderliche Ableitung des Wassers gesichert, welches durch in dem Falzbereich vorgesehene Stege, wie bekannt, im Kopffeld gesammelt und über die oberseitige Verfalzung des Seitenbereiches zu dem sich unten anschließenden nächsten Ziegel weitergeleitet werden kann.

Bei einer bevorzugten Ausbildung der erfindungsgemäßen Verkleidungselelemente ist in dem außerhalb der oberseitigen Falzfelder liegenden Bereich der Elemente mindestens ein vom Kopffeld bis zum Elementenfuß verlaufender Kanal vorgesehen, wobei zweckmäßigerweise sich der Kanalgrund auf gleicher Höhe wie die durch das seitliche Falzfeld vorgegebene Grundfläche befindet.

Die Anordnung dieses oder dieser Kanäle ist bei aneinandergrenzenden Elementen so zu wählen, daß deren Kanäle in Längsrichtung miteinander fluchten. Auf diese Weise ist noch für eine zusätzliche Möglichkeit der Ableitung des Wassers gesorgt. Als einem weiteren, für die gegenwärtige Zeit besonders bedeutsamen Vorteil des erfindungsgemäßen Elementes, ist jedoch darauf hinzuweisen, daß ein oder mehrere Kanäle in die Oberfläche der Elemente eingebracht sein können, deren Grundfläche etwa parallel zu der die Oberkanter des Elementes enthaltenden gedachten Ebene des Elementes verläuft. In diesen oder diese Kanäle können vorzugsweise die Kanäle eingebettet sein, deren Grund auf der Höhe der Grundfläche des seitlichen Falzbereiches liegt.

In diejenigen Kanäle, deren Grundfläche etwa parallel zu den Oberkanten der Elemente verläuft, können, die Einheitlichkei der Dachoberfläche kaum unterbrechend, wasserführende Rohre der Solarzellen eingelassen werden, die ohne große Kostenerhöhung verlegt und zu einem Sammler, welcher vorzugsweise unter dem First anzuordnen ist, geführt werden.

Gemäß einer weiteren vorzugsweisen Ausbildung der erfindungsgemäßen Elemente weisen die genannten Kanäle einen zur
Oberfläche des Elementes hin offenen U-förmigen oder V-förmigen Querschnitt auf. Diese Querschnittsform ist aus Gründen
der Frostsicherheit gewählt, um die Sprengwirkung sich
bildender Eisschichten zu vermeiden.

Einzelheiten der Erfindung ergeben sich aus der nachstehenden
Beschreibung verschiedener Ausbildungen der erfindungsgemäßen
Dach- und Wandverkleidungselemente anhand der Zeichnung.
Hierin zeigen:

Fig. 1 ein Wandverkleidungselement mit einer im wesentlichen
eben verlaufenden Oberfläche in perspektivischer
Darstellung,.

Fig. 2 einen erfindungsgemäßen Dachziegel, dessen Oberkanten
in einer gemeinsamen Ebene liegen in perspektivischer
Darstellung,

Fig. 3 ein Längsschnittbild von zwei in Längsrichtung
miteinander vereinigten erfindungsgemäßen Ziegeln
nach Fig. 2 in abgebrochener Darstellung,

Fig. 4 eine weitere Ausbildung eines erfindungsgemäßen
Dachverkleidungselementes im Längsschnitt,

Fig. 5a eine weitere Ausbildung eines erfindungsgemäßen
Dachziegels im Längsschnitt,

Fig. 5b ein Längsschnittbild von zwei miteinander vereinigten
Dachziegeln nach Fig. 5a,

Fig. 6 eine weitere Ausbildung eines erfindungsgemäßen Wand-
oder Dachverkleidungselementes im Längsschnitt,

Fig. 7 ein Querschnittsbild eines Dachziegels in seinem
mittleren Bereich in abgebrochener Darstellung mit
rechtwinkligem Kanalprofil,

Fig. 8 ein Querschnittsbild eines Dachziegels in seinem
mittleren Bereich in abgebrochener Darstellung mit
U-förmigem Kanalprofil und

Fig. 9 ein Querschnittsbild eines Dachziegels in seinem
mittleren Bereich in abgebrochener Darstellung mit
V-förmigem Kanalprofil.

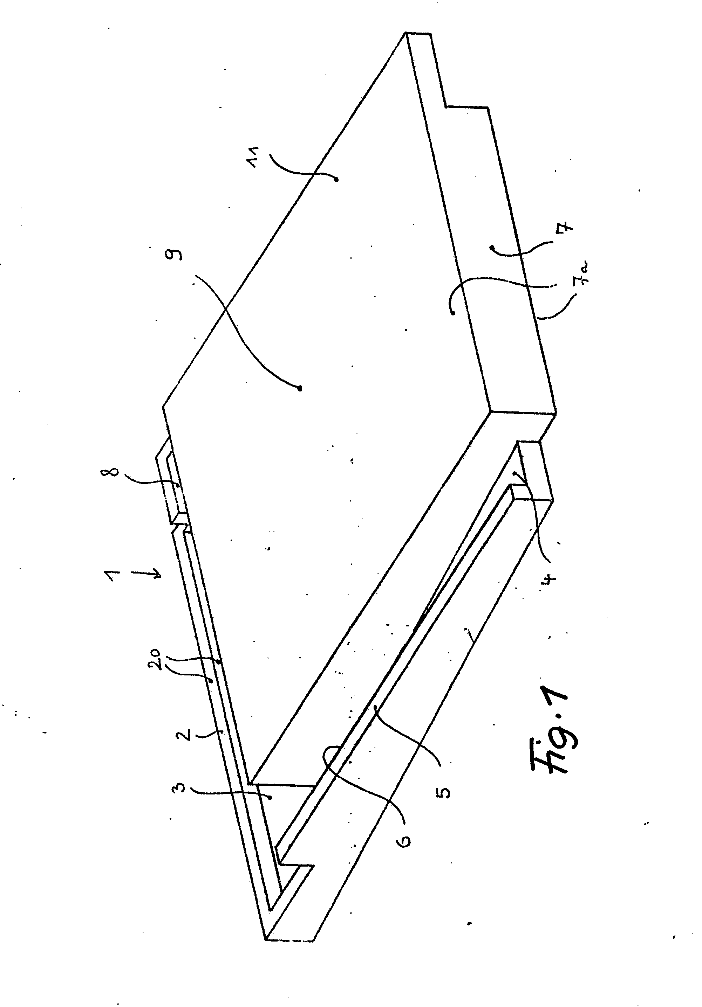

Übereinstimmende Konstruktionselemente sind in den verschiedenen Figuren mit übereinstimmenden Bezugszeichen gekennzeichnet. Ein in Fig. 1 gezeigtes Wandverkleidungselement 1 ist nach Art eines einfach verfalzten Falzziegels ausgebildet mit einer durch eine Kopffalzrippe 2 nach oben begrenzten Kopffalznut 3. An die Kopffalzrippe 2 schließt sich rechtwinkelig eine eine Seitenfalznut 4 begrenzende Seitenfalzrippe 5 an. Kopffalzrippe 2 und Kopffalznut 3 heißen Kopffeld 20.

Ein weiteres im Kopfbereich des Wandverkleidungselementes 1 vorgesehenes Falzfeld 8 dient der gegen Wasserdurchtritt gesicherten Vereinigung von vier in diesem Eckbereich aneinanderstoßender und übereinanderliegender Wandverkleidungselemente 1.

Die Kopffalznut 3 ist mit einer durch die Seitenfalzrippe 5 einerseits und die Flachform 9 des Elementes 1 andererseits begrenzte Seitenfalznut 4 zur Wasserableitung verbunden.

Die Formfläche 9 des Elementes ist eben ausgebildet und setzt sich kontinuierlich in einen auf gleicher Höhe liegenden längsseitigen Deckfalz 11 fort, welcher dazu dient, die Seitenfalzrippe 5 und die Seitenfalznut 4 eines seitlich benachbarten Elementes 1 zu überdecken und unmittelbar an die Formfläche 9 des benachbarten Elementes anzuschließen.

Die Formfläche 9 des Elementes 1 verläuft von der Stirnfläche 7 des Fußes 7a keilförmig, bezogen auf die Grundfläche 6 der Seitenfalznut 4, bis sie im Bereich der Kopffalznut 3 eine solche Höhe über dieser Kopffalznut 3 erreicht hat, daß sie höhengleich mit der Stirnfläche 7 des Fußfeldes 7a eines auf dem Kopffeld 20 des Elementes 1 von oben heraufliegenden Fußfeldes 7a eines angrenzenden Elementes 1 anschließt. Dadurch wird erreicht, daß die Formflächen 9 der in Längsrichtung aneinander grenzenden Elemente 1 in einer gemeinsamen Ebene liegen.

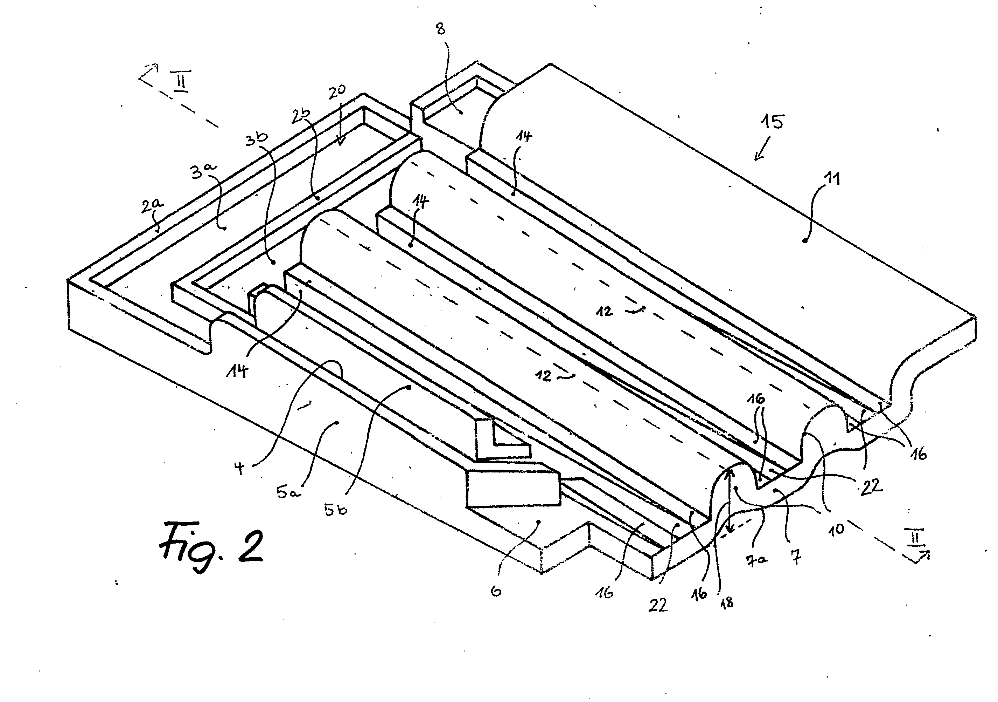

Ein ebenfalls nach dem Konstruktionsprinzip eines Falzziegels, allerdings in diesem Fall mit doppelter Kopfverfalzung, aufgebauter Dachziegel 15 ist in Fig. 2 gezeigt. Hier wird die Kopffalznut 3 durch eine zusätzliche innere Kopffalzrippe 2b in eine äußere Kopffalznut 3a und eine innere Kopffalznut 3b geteilt. Die Kopffalzrippe 2 des Elementes 1 heißt in diesem Fall äußere Kopffalzrippe 2a. Die beiden Kopffalznuten 3a und 3b entwässern in die Seitenfalznut 4 wie im Fall des Elementes 1. Das für den Zusammenbau des Vierziegelecks dienende Falzfeld 8 ist, wie im Zusammenhang mit Fig. 1 beschrieben, auch hier vorgesehen.

Anstelle einer ebenen zusammenhängenden Ziegelformfläche 9 sind hier zwei parallel zueinander in einem Abstand voneinander vom Ziegelfuß 7a bis zum Beginn der inneren Kopffalznut 3b verlaufende, sich von der Grundfläche 6 der Seitenfalznut 4 aus erhebende etwa U-förmige Profile 10 vorgesehen, deren Scheitellinien 12 in einer gemeinsamen gedachten Ebene liegen. Der den Ziegel 15 auf seiner der äußeren Seitenfalzrippe 5a gegenüberliegenden Seite längsseitig begrenzende Deckfalz 11 wölbt sich bei dieser Ausbildung ebenfalls von dem Niveau der Grundfläche 6 ausgehend bis zu der gedachten, durch die beiden Scheitellinien 12 bestimmten Ebene nach oben und erstreckt sich mit seiner in dieser Ebene verlaufenden Oberfläche bis auf eine Breite, die der Breite der äußeren Seitenfalzrippe 5a, der Seitenfalznut 4 und der inneren Seitenfalzrippe 5b entspricht, um die beiden Seitenfalzrippen 5a und 5b und die Seitenfalznut 4 eines seitlich benachbarten Ziegels 15 übergreifen zu können.

Die Scheitellinien 12 der im wesentlichen U-förmigen Profile 10 verlaufen parallel zueinander und steigen beide in einem spitzen Winkel zum Niveau der Grundfläche 6 bis zur inneren Kopffalznut 3b an, wo beide Profile 10 auf gleicher Höhe enden.

Die am Beginn der inneren Kopffalznut 3b erreichte Höhe der Scheitellinien 12 entspricht einem Abstand von dem Niveau der Grundfläche 6 der der Gesamthöhe des Ziegels 15 im Bereich seines Fußfeldes 7a entspricht. Hierbei ist zu beachten, daß durch die gewählte perspektivische Darstellung der Fig. 2 am Fußfeld 7 nach unten ragende Fußfalzrippen 13a und 13b nicht sichtbar sind, mit welchen sich der Ziegel 15 beim Überlappen des Kopffeldes 20 eines in Längsrichtung nach unten angrenzenden Ziegels 15 auf dessen Kopffalznuten 3a und 3b abstützt. D.h. mit anderen Worten, die Scheitellinien 12 enden in einer Entfernung über dem Niveau der Grundfläche 6, die der Länge des im Bereich des Ziegelfußes 7a eingetragenen Pfeiles 18 zuzüglich der Höhe der hier nicht sichtbaren Fußfalzrippen 24a und b entspricht.

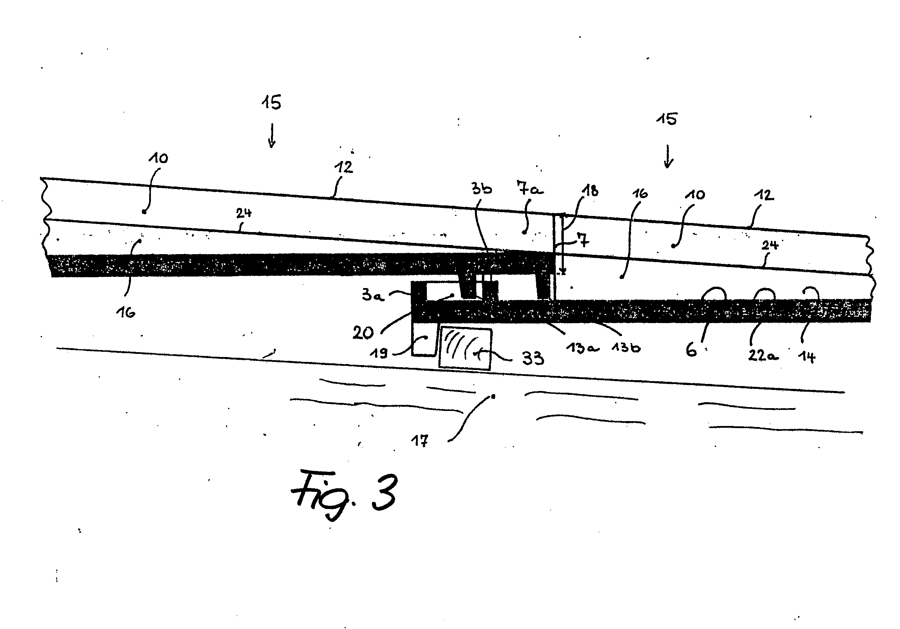

Der Verlauf der Profile 10 ist am besten aus dem in Fig. 3 gezeigten Längsschnitt zu erkennen, auf den nachstehend noch näher eingegangen wird.

Bei dem in Fig. 2 gezeigten Ziegel 15 verlaufen zwischen den beiden Profilen 10, zwischen dem Deckfalz 11 und dem einen Profil 10 sowie zwischen dem anderen Profil 10 und der inneren Seitenfalzrippe 5b Kanäle 14, deren Bette 22 auf gleichem Niveau mit der Grundfläche 6 der Seitenfalznut 4 liegen. Die Kanäle 14 sind eingebettet in an die Profile 10, den Deckfalz 11 und die innere Seitenfalzrippe 5b angrenzende Randstege 16, deren Oberkanten parallel zu den Scheitellinien 12 verlaufen. Die Stege 16 beginnen am Ziegelfuß 7a auf dem Niveau der Grundfläche 6. Sie steigen aufgrund ihrer parallel zu den Scheitellinien 12 verlaufenden Oberkanten ebenfalls zur inneren Kopffalznut 3b keilförmig an, so daß sie ebenfalls eine Ebene definieren, die parallel zu der gedachten die Oberkanten des Elementes enthaltenden Ebene liegt.

Die Randstege 16 können als Auflager für Wasserleitungsrohre
(nicht dargestellt) von Solarzellen dienen, die auf diese
Weise ohne weiteren technischen Aufwand, von außen nur wenig
sichtbar, ohne komplizierten Einbau in den Ziegelkörper
eingebettet werden können.

Die Randstege 16 können bei Wandverkleidungen zur Aufnahme
von Halterohren (nicht dargestellt) dienen, die eine einzelne
Verklammerung jedes Elementes überflüssig macht.

Die zwischen den Randstegen 16 verlaufenden, tiefer liegenden
Kanäle 14 haben die Aufgabe, die Wasserableitung und Entlüftung von der inneren Kopffalznut 3b zum Fußfeld 7 zu besorgen.

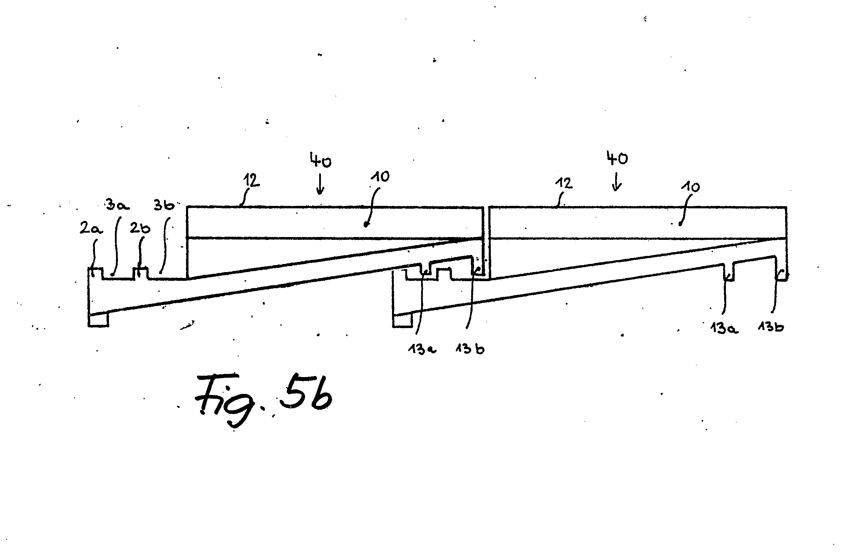

Um die Ausbildung der Kanäle 14 sowie die Anordnung der
Randstege 16 im Bereich der Profile 10 zu verdeutlichen, sei
auf die Querschnittsdarstellungen der Fig. 7, 8 und 9
verwiesen.

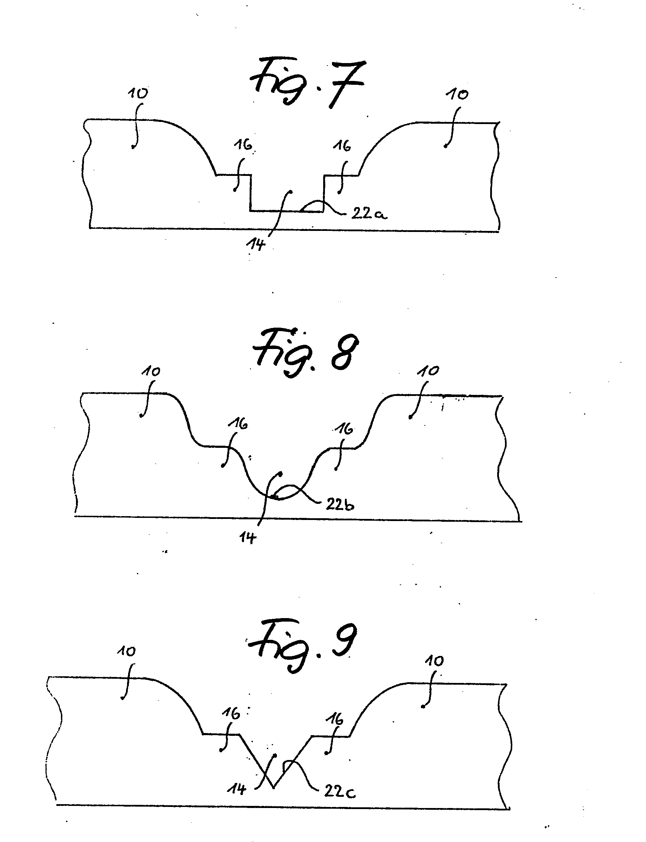

Gemäß Fig. 7 schließen sich die Randstege 16 mit rechtwinkeligem Profil an die Profile 10 seitlich an und begrenzen den
zwischen ihnen verlaufenden Kanal 14 mit waagerechtem Bett
22a. Zur Vermeidung einer Sprengwirkung durch die Bildung vom
im Kanal 14 fließenden vereisenden Wasserläufen, sind die
Konturen der Randstege 16 sowie das Kanalbett 22b abgerundet
ausgebildet (Fig. 8). Auch eine V-förmige Begrenzung 22c für
den zwischen den Randstegen 16 verlaufenden Kanal 14 wirkt
einer Sprengwirkung sich bildender Eisschichten entgegen
(Fig. 9).

Aus dem Schnittbild nach Fig. 3, in welchem zwei in Längsrichtung aneinandergrenzende Ziegel 15 gemäß Fig. 2 im
Längsschnitt längs der Linie II-II gezeigt sind, geht hervor,
wie die beiden Ziegel 15 miteinander verbunden und an einer
Konterlattung 17 befestigt sind. In Latten 33 werden die
Ziegel 15 mit ihren auf der Unterseiten des Kopffeldes 20
vorgesehenen Aufhängenasen 19 in herkömmlicher Weise so eingehängt, daß ihr Fußfeld 7a das Kopffeld 20 des nach unten angrenzenden Ziegels 15 so weit überlappt, daß seine auf der Unterseite des Fußfeldes 7a vorgesehenen Fußfalzrippen 13a und 13b auf den Kopffalznuten 3a und 3b des angrenzenden Ziegels 15 aufliegen. Die Stirnseite 7 des Ziegelfußes 7a liegt an der kopffeldseitigen Stirnfläche des Profils 10 an. Die Entfernung der Scheitellinie 12 von dem Niveau der Grundfläche 6 an dieser Stelle entspricht genau der Stärke des Ziegelfußes 7, siehe Pfeil 18, zuzüglich der Höhe seiner Fußfalzrippen 13a und 13b. Hierdurch ist erreicht, daß die Scheitellinien 12 der beiden aneinandergrenzenden Ziegel 15 in einer fortlaufenden Geraden liegen. Das gleiche gilt auch für die Oberkanten 24 der zwischen den Profilen 10 vorgesehenen Randstege 16. Das Niveau des Bettes 22a des von dem Randsteg 16 begrenzten Kanals 14 liegt niveaugleich mit der Grundfläche 6.

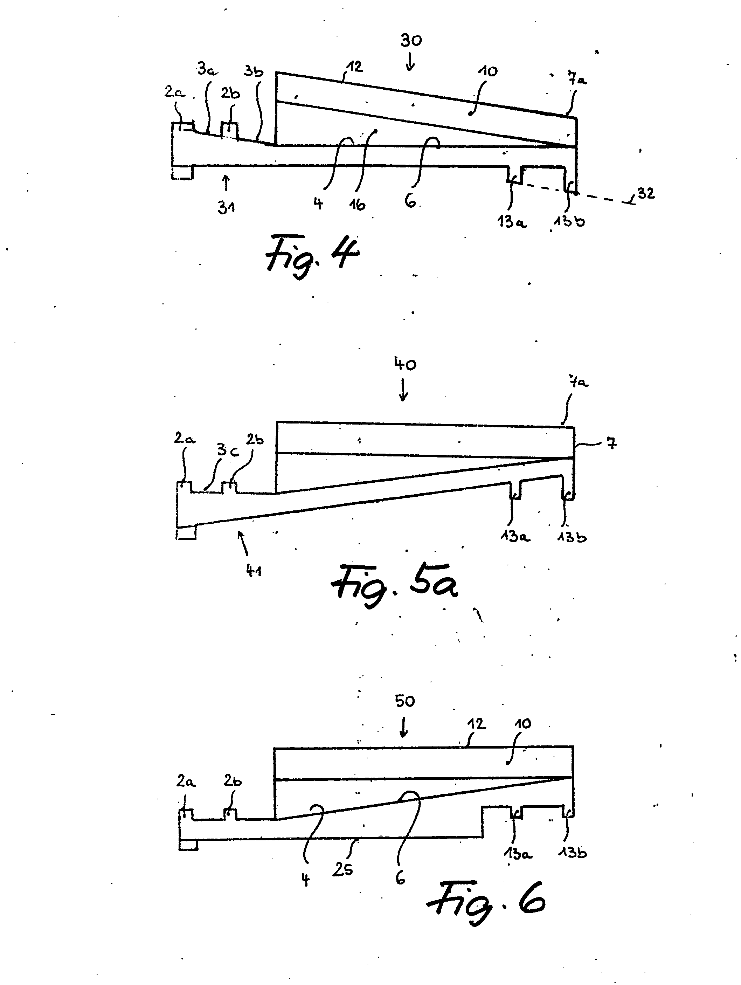

In Fig. 4 ist ein Falzziegel 30 im Längsschnitt gezeigt, dessen Oberfläche von mindestens zwei parallel zueinander, vom Ziegelfuß 7a bis zum Kopffeld 31 keilförmig ansteigenden Profilen 10 gebildet ist, zwischen denen Randstege 16 mit parallel zu den Scheitellinien 12 der Profile 10 verlaufender Oberkante vorgesehen sind.

Das Kopffeld 31 des Ziegels 30 ist auf seiner Oberseite in herkömmlicher Weise durch die äußere Kopffalzrippe 2a begrenzt und weist in seinem mittleren Bereich eine innere Kopffalzrippe 2b auf. Seine äußere Kopffalznut 3a und seine innere Kopffalznut 3b verlaufen aber nicht wie bei den Ausbildungen des Kopffeldes 20 nach den Fig. 1 - 3 in der Ebene 6 der Seitenfalznut 4, sondern parallel zum Verlauf der die Scheitellinie 12 des Profils 10 enthaltenden, gedachten Ebene. Die beiden auf der Unterseite des Fußfeldes 7a nach unten ragenden Fußfalzrippen 13a und 13b sind an ihren freien Enden derart abgeschrägt, daß sie in einer ebenfalls gedachten Ebene 32 liegt, die parallel zu der die Scheitellinien 12 des Profils 10 enthaltenden, gedachten Ebene verläuft. Hierdurch wird erreicht, daß bei einer geringen Verschiebung zweier in Längsrichtung aneinandergrenzender Ziegel 30 ihre

durch die Scheitel 12 definierten Oberkanten trotzdem in der gemeinsamen, gedachten Ebene verbleiben und somit die Dachfläche in Gesamtansicht auch an den Ziegelgrenzflächen keinen Knick erkennen läßt.

Demgegenüber ist bei einer Kopf- und Fußfeldausbildung gemäß der in Fig. 3 gezeigten Ausbildung des Ziegels 15 bei einer Spaltbildung zwischen den aneinandergrenzenden beiden Ziegeln eine Stufe zwischen den benachbarten aneinandergrenzenden Profilen 10 in Kauf zu nehmen,wodurch der Gesamteindruck der Dachfläche gestört wird.

Fig. 5a zeigt eine weitere Ausbildung eines Ziegels 40. Hier ragen die Fußfalzrippen 13a und 13b auf der Unterseite des Fußfeldes 7a parallel zueinander und parallel zur Stirnfläche 7, jedoch nicht rechtwinkelig zum Verlauf der Unterseite des Ziegels 40, sondern rechtwinkelig zu dessen Oberkanten 12 nach unten, während die von der Grundfläche 3c des Kopffeldes 41 aus nach oben ragenden Kopffalzrippen 2a und 2b rechtwinkelig zur Grundfläche 3c verlaufen, die ihrerseits parallel zu den Oberkanten 12 verläuft.

Auch bei dieser Ausbildung wird erreicht, daß ein geringer Spalt zwischen dem Ziegelfuß 7 und der dem Kopffeld 41 zugewandten Stirnfläche des in Längsrichtung angrenzenden Ziegels 40 die Einheitlichkeit der Dachfläche nicht stört, da die Oberkanten der aneinandergrenzenden Profile 10 aufeinanderfolgender Ziegel 40 in der gleichen gedachten Ebene verbleiben wie aus der in Fig. 5b gezeigten Darstellung von zwei miteinander verbundenen Ziegeln 40 zu erkennen ist.

Die in Fig. 6 gezeigte Ausbildung eines Wand- oder Dachverkleidungselementes 50 unterscheidet sich von den bisher beschriebenen Elementen dadurch, daß seine Oberkanten 12 in einer gedachten Ebene liegen, die parallel zu einer ebenfalls gedachten Ebene verläuft, in der die Unterkanten 25 des Elementes 50 liegen. In diesem Zusammenhang sei bemerkt, daß bei sämtlichen bisher beschriebenen Ausbildungen von Ziegeln oder Wandverkleidungselementen auch die Unterseite eine gewisse Profilierung aufweisen kann. Diese Profilierung ist in diesem Zusammenhang von untergeordneter Bedeutung und dient nur dazu, das Gewicht des Elementes zu verringern. Man könnte daher auch davon ausgehen, daß anstelle einzelner Unterkanten 25 eine kontinuierliche Fläche 25 die Unterseite des Elementes 50 bildet. Auch bei dem Element 50 überlappen sich Kopffeld und Fußfeld entsprechend wie bie den vorstehend beschriebenen Ziegeln. Das Niveau der Grundfläche 6 der Seitenfalznut 4 verläuft aber in einem spitzen Winkel zur Unterkante 25 des Elementes 50. Diese Ausführungsform wird man allerdings nur dann wählen, wenn man ein Material von relativ geringem spezifischen Gewicht zur Verfügung hat, da das Gesamtvolumen bei dieser Ausbildungsform gegenüber den vorstehend beschriebenen Ausbildungen erheblich größer ist.

**Patentansprüche:**

1. Wand- und Dachverkleidungselement für Solaranlagen, gebildet aus einer im wesentlichen rechtwinkeligen, viereckigen Flachform mit in deren Kopffeld und in deren einem längsseitigen Bereich vorgesehener oberseitiger und ggfs. in deren Fußfeld und in deren anderem längsseitigem Bereich vorgesehener unterseitiger Verfalzung, mit einer Ebene, welche die Oberkanten des außerhalb der oberseitigen Falzfeder gelegenen Elementenbereiches enthält, beginnend an der oberen Kante des Elementenfußes, in einem spitzen Winkel vom Niveau der Grundfläche der Seitenfalznut soweit ansteigt, bis sie am formseitigen Beginn des Kopffeldes eine der Gesamthöhe des Elementes im Fußbereich entsprechende Entfernung von der Grundfläche erreicht hat, so daß die Oberkanten in Längsrichtung einander benachbarter mit ihrem Fußfeld jeweils das Kopffeld des nächsten Elementes überlappender Elemente in einer gemeinsamen Ebene liegen, **dadurch gekennzeichnet,** daß in dem außerhalb der oberseitigen Falzfelder (3, 4, 8, 20) liegenden Elementenbereich (9) mindestens ein vom Kopffeld (20) bis zum Fußfeld (7a) verlaufender Kanal (14, 16) vorgesehen ist, daß der Kanalgrund (16) parallel zu der die Oberkanten (12) des Elementes (1, 15, 31) enthaltenden gedachten Ebene verläuft, und daß die im außerhalb der oberseitigen Falzfeder liegenden Elementenbereich (9) vorgesehenen Kanäle (16) für die Aufnahme von Flüssigkeitsrohren, -schläuchen oder dergl. für Solaranlagen ausgebildet sind.

2. Element nach Anspruch 1, dadurch gekennzeichnet, daß die die vom Fußfeld (7a) bis zum Kopffeld (20, 31, 41) verlaufenden Oberkanten (12) des Elementes (1, 15, 30, 40) enthaltende gedachte Ebene spitzwinkelig zu der die Unterkanten (25) des Elementes enthaltenden gedachten Ebene verläuft.

3. Element nach Anspruch 1, dadurch gekennzeichnet, daß die die Oberkanten (12) des Elementes (50) enthaltende gedachte Ebene parallel zu der die Unterkanten (25) des Elementes (50) enthaltenden gedachten Ebene verläuft.

4. Element nach einem der Ansprüche 1 - 3, dadurch gekennzeichnet, daß im Kopffeld (20, 31, 41) Nuten (3, 3a, 3b, 3c) zur Abstützung des Fußfeldes (7a) eines in Längsrichtung benachbarten Elementes (1, 15, 30, 40) vorgesehen sind und der Nutengrund (3, 3a, 3b, 3c) parallel zu der die Oberkanten (12) des Elementes enthaltenden gedachten Ebene verläuft.

5. Element nach einem der Ansprüche 1 - 4, dadurch gekennzeichnet, daß die freien Enden von im Fußfeld (7a) vorgesehenen Fußfalzrippen (13a, 13b) in einer gemeinsamen Ebene (32) liegen, die parallel zu der die Oberkanten (12) des Elementes (1, 15, 30, 40) enthaltenden gedachten Ebene verläuft.

6. Element nach einem der Ansprüche 1 - 5, dadurch gekennzeichnet, daß der Kanalgrund (22, 22a, b, c) auf gleicher Höhe wie die durch die Seitenfalznut (4) vorgegebene Grundfläche (6) liegt.

7. Element nach Anspruch 6, dadurch gekennzeichnet, daß der Kanal (14, 16) parallel zu den Seitenfalzrippen (5) des Elementes (15) verläuft.

8. Element nach Anspruch 6 oder 7, dadurch gekennzeichnet, daß ein Kanal (14) mit einer mit der Grundfläche (6) der Seitenfalznut (4) höhengleich liegenden Grundfläche (22, 22a, b, c) in einem Kanal (16), dessen Grundfläche parallel zu der Oberkante (12) des Elementes (15) verläuft, eingebettet ist.

9. Element nach einem der Ansprüche 6, 7 oder 8, dadurch gekennzeichnet, daß die Kanäle (14, 16) einen zu den Oberkanten des Elementes hin offenen U-förmigen oder V-förmigen Querschnitt aufweisen.

10. Element nach einem der Ansprüche 1 - 9, dadurch gekennzeichnet, daß es aus Ziegel, Beton, Blech oder Kunststoff besteht.

Fig. 1

1/6

0195837

**Fig. 2**

Fig. 3

0195837

Fig. 4

Fig. 5a

Fig. 6

Fig. 5b

6/6

0195837

**Fig. 7**

10   16   16   10

22a

14

**Fig. 8**

10   16   16   10

22b

14

**Fig. 9**

10   16   16   10

14   22c

0195837
Nummer der Anmeldung

# EUROPÄISCHER RECHERCHENBERICHT

**Europäisches Patentamt**

EP 85 10 3661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | BE-A- 894 656 (SOETENS) <br><br> * Seite 7, Zeilen 30-32; Seite 8; Figuren 7,8. * | 1,3,4, 6,7,9, 10 | F 24 J 2/04 |
| Y | DE-C- 733 390 (LUDOWICI) <br><br> * Seite 1, Zeilen 39-64; Seite 2, Zeilen 1-13; Figuren 1,2,3 * | 1,3,4, 6,7,9, 10 | |
| A | EP-A-0 109 374 (SOETENS) <br><br> * Seite 6; Seite 7, Zeilen 1-3; Figuren 3,4,5 * | 1,3,4, 7,10 | |
| A | DE-C- 19 157 (MÖNCH) <br> * Figuren * | 1,2,10 | RECHERCHIERTE SACHGEBIETE (Int. Cl.4) |
| A | DE-C- 827 247 (LUDOWICI) <br><br> * Figuren 1,2 * | 1,2,9, 10 | F 24 J <br> E 04 D |
| A | DE-A-2 832 415 (STUBER) <br> * Figuren * | 1,10 | |
| A | FR-A-2 469 673 (USINOR) <br> * Figuren 1,3 * | 1 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 18-11-1985 | CHESNEAUX J.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 522 047 (ABOUTH) <br> * Figuren * | 1 | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 18-11-1985 | CHESNEAUX J.C. |